# EUROPÄISCHE PATENTSCHRIFT

(11) **EP 1 749 155 B1**
(45) Veröffentlichungstag und Bekanntmachung des Hinweises auf die Patenterteilung: **18.02.2009**
(21) Anmeldenummer: 04735221.6
(22) Anmeldetag: 28.05.2004
(51) Int. Cl.: F16C 35/077

(54) **VERFAHREN ZUR MONTAGE EINES LAGERS**
METHOD FOR ASSEMBLING A BEARING
PROCEDE POUR MONTER UN PALIER

(43) Veröffentlichungstag der Anmeldung: 07.02.2007
(73) Patentinhaber: AB SKF, 415 50 Göteborg (SE)
(72) Erfinder: HOCH, Paul-Gerhard, 97456 Dittelbrunn (DE); LIANG, Baozhu, 97456 Dittelbrunn-Hambach (DE); HERTERICH, Thomas, 97490 Poppenhausen (DE)
(74) Vertreter: Kohl, Thomas
(86) Internationale Anmeldenummer: PCT/EP2004/005833
(87) Internationale Veröffentlichungsnummer: WO 2005/119075

(56) Entgegenhaltungen:
- EP-A- 0 992 698
- DE-C- 969 991
- GB-A- 2 097 489
- GB-A- 2 175 965
- US-A- 4 339 158
- US-A- 5 509 667

## Beschreibung

Die Erfindung betrifft ein Verfahren zur Montage eines Lagers in einem zumindest abschnittsweise rotationssymmetrisch ausgebildeten Deckelelement eines Maschinenteils.

Bei vielen Anwendungen im Maschinenbau ist es erforderlich, zur Lagerung eines Wellenabschnitts relativ zu einem Gehäuse ein Wälzlager so einzubauen, dass eine präzise Führung der Welle relativ zum Gehäuse sichergestellt wird.

Aus der GB 2 097 489 A ist eine Lageranordnung bekannt, bei der ein Rillenkugellager zur Lagerung eines rotationssymmetrisch ausgebildeten und aus einem dünnen Blech hergestellten Wellenelements in einem ebenfalls aus Blech bestehenden Gehäuse dient.

Die GB 2 175 965 A offenbart ein rotationssymmetrisch ausgebildetes Deckelelement, in dem ein Rillenkugellager angeordnet ist. Dieses dient zur Aufnahme des Zapfens eines Wellenabschnitts, so dass dieser relativ zum Deckelelement gelagert ist.

Insbesondere bei Anwendungen im Elelctromotorenbau kommt es darauf an, dass eine präzise Lagerung des Rotors relativ zum Gehäuse sichergestellt wird. Problematisch ist es in diesem Zusammenhang, dass aufgrund der üblichen Konstruktion des Elektromotors das Deckelelement in relativ großem axialen Abstand von der Lagerstelle am Gehäuse festzulegen ist. Dadurch ist es schwierig, eine hohe Präzision der Lagerposition sicherzustellen, da an den jeweiligen Anschlussstellen stets Fertigungstoleranzen zum Tragen kommen, so dass auch die Präzision der Lagerung selber entsprechend toleranzbehaftet ist.

Um eine hinreichende Präzision der Lagerung sicherzustellen, muss folglich die Toleranzkette möglichst gering gehalten werden, was einen sehr hohen Aufwand in der Fertigung bedeutet und entsprechende Kosten nach sich zieht.

Der Erfindung liegt daher die **Aufgabe** zugrunde, ein Verfahren zur Montage eines Lagers in einem Deckelelement eines Maschinenteils zu schaffen, mit dem es möglich ist, das Lager relativ zum Gehäuse exakt zu positionieren, ohne umständliche Vorkehrungen für ein besonders präzises Fertigen der einzelnen Komponenten des Maschinenteils treffen zu müssen.

Die **Lösung** dieser Aufgabe erfolgt durch ein Verfahren, dass die folgenden Schritte aufweist:
a) Anordnen des Lagers an einer Referenzfläche eines Montagedorns;
b) Positionieren und Festlegen des Deckelelements mit mindestens einer Anschlagsfläche an mindestens einer Referenzfläche des Montagedoms;
c) Fixieren des Lagers an seiner Sitzfläche im Deckelelement in einer relativ zum Montagedorn definierten Lage;
d) Abnehmen des Deckelelements mit in ihm montierten Lager vom Montagedom;
e) Montieren des Deckelelements mit in ihm montierten Lager in das Maschinenteil, wobei die Anschlagsfläche des Deckelelements an einer Referenzfläche des Maschinenteils zur Anlage gebracht wird.

In einer alternativen Ausgestaltung sieht das Verfahren die folgenden Schritte vor:
a) Positionieren und Festlegen des Deckelelements mit mindestens einer Anschlagsfläche an mindestens einer Referenzfläche eines Montagedoms;
b) Einsetzen und Fixieren des Lagers an seiner Sitzfläche im Deckelelement in einer relativ zum Montagedorn definierten Lage;
c) Abnehmen des Deckelelements mit in ihm montierten Lager vom Montagedorn;
d) Montieren des Deckelelements mit in ihm montierten Lager in das Maschinenteil, wobei die Anschlagsfläche des Deckelelements an einer Referenzfläche des Maschinenteils zur Anlage gebracht wird.

Das Erfindungskonzept stellt also darauf ab, dass zur Montage des Lagers ein spezieller Montagedorn benutzt wird, der mit präzise zueinander ausgerichteten Referenzflächen versehen ist. An diesen Referenzflächen wird sowohl das Deckelelement als auch das zu montierende Lager ausgerichtet, so dass sich das Deckelelement und das Lager relativ zueinander in exakt der Position befinden, die später im montierten Zustand des gesamten Maschinenteils eingenommen werden sollen. Nach der Ausrichtung von Deckelelement und Lager auf dem Montagedorn wird das Lager relativ zum Deckelelement fixiert. Die so vormontierte Einheit wird dann in das Maschinenteil montiert, wobei eine Anschlagsfläche des Deckelelements an einer entsprechenden Referenzfläche am Maschinenteil zur Anlage gebracht wird. Somit werden sämtliche Toleranzen in der Toleranzkette unbeachtlich und insgesamt eine präzise Montage des Lagers im Maschinenteil erreicht.

Eine Weiterbildung sieht vor, dass bei der Durchführung des Schritts b) gemäß der erstgenannten Lösungsmöglichkeit bzw. des Schritts a) gemäß der zweitgenannten Lösungsmöglichkeit das Deckelelement mit mindestens einer Anschlagsnase relativ zum Montagedorn positioniert wird.

Ferner kann vorgesehen werden, dass bei der Durchführung des Schritts c) gemäß der ersten Lösungsmöglichkeit bzw. des Schritts b) gemäß der zweiten Lösungsmöglichkeit das Lager mittels einer Klebeverbindung im Deckelelement fixiert wird. Alternativ zu einer solchen Klebeverbindung kommt auch eine Kunststoffeinspritzung bzw. Kunststoffumspritzung in Frage, mit der das Lager relativ zum Deckelelement festgelegt wird. Als weitere Alternative hierzu ist es möglich, das Lager mittels mechanischem Klemmen im Deckelelement zu fixieren; hierbei hat sich insbesondere ein mechanisches Verstemmen bewährt.

Das Maschinenteil ist bevorzugt ein Elektromotor.

Mit der vorgeschlagenen Vorgehensweise wird es möglich, die Montage eines Lagers in einem Elektromotor in sehr schneller und kostengünstiger Weise vorzunehmen und dabei dennoch sicherzustellen, dass das Lager genau in der Position angeordnet ist, in der es den Rotor relativ zum Gehäuse des Elektromotors lagern soll. Der für die Montage benötigte Montagedorn ist leicht zu fertigen und das Verfahren einfach handhabbar, so dass insgesamt eine Verbesserung und Verbilligung des Montageprozesses möglich wird.

In der Zeichnung ist ein Ausführungsbeispiel der Erfindung dargestellt. Es zeigen:
- Figur 1: schematisch die Schnittdarstellung durch ein Lager, ein Deckelelement und einen Montagedorn und
- Figur 2: schematisch eine Schnittdarstellung durch das Lager, das Deckelelements und ein Maschinenteil in Form eines Elektromotors.

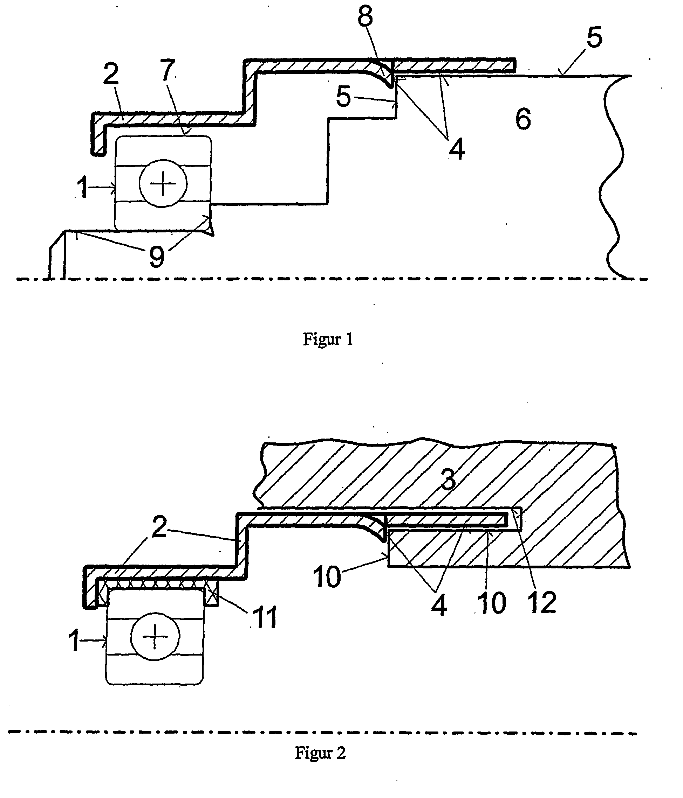

Figur 1 zeigt einen Montagedorn 6, der mit verschiedenen Referenzflächen 5 und 9 versehen ist, die relativ zueinander hochpräzise angeordnet sind. Hierzu besteht der Montagedorn 6 aus gehärtetem Stahl; die Referenzflächen 5, 9 sind geschliffen.

Die Referenzfläche 5 dient zum Anschlag eines auf den Montagedorn 6 aufgeschobenen Deckelelements 2. Das Deckelelement 2 weist hierzu Anschlagsnasen 8 auf, von denen in Figur 1 nur eine zu sehen ist. Die Anschlagsnase 8 hat eine Anschlagsfläche 4. Das rotationssymmetrisch ausgebildete Deckelelement 2 wird axial auf dem Montagedorn 6 aufgeschoben, bis die Anschlagsfläche 4 an der axialen Referenzfläche 5 anliegt. Dadurch ist das Deckelelement 2 relativ zum Montagedorn 6 axial ausgerichtet. Die radiale Ausrichtung des Deckelelements 2 relativ zum Montagedorn 6 erfolgt über den hohlzylindrisch ausgebildeten Abschnitt des Deckelelements 2, der sich in Figur 1 rechts von der Anschlagsfläche 4 aus erstreckt. Dieser hohlzylindrische Abschnitt wird durch die zylindrisch ausgebildete Referenzfläche 5 des Montagedorns 6 zentriert, so dass das Deckelelement 2 insgesamt sowohl axial als auch radial relativ zum Montagedorn 6 ausgerichtet ist.

Bevor das Deckelelement 2 auf den Montagedorn 6 aufgeschoben wird, wird zunächst das zu montierende Lager 1 auf dem Montagedorn 6 positioniert. Hierfür weist der Montagedorn 6 eine radiale und eine axiale Referenzfläche 5 auf, die den Innenring des Lagers 1 radial und axial relativ zum Montagedorn 6 festlegt.

Nachdem zunächst das Lager 1 und anschließend das Deckelelement 2 auf den Montagedorn 6 aufgeschoben sind, wird das Lager 1 mit dem Deckelelement 2 verbunden. Die Sitzfläche 9 des Lagers 1 weist im allgemeinen - wie in Figur 1 zu sehen - Luft zum entsprechenden hohlzylindrischen Abschnitt des Deckelelements 2 auf, das das Lager 1 umgibt. Dieser Abstand wird beispielsweise durch Einspritzen von Kunststoff ausgefüllt. Nach dem Aushärten des Kunststoffmaterials liegt ein fester Verbund von Lager 1 und Deckelelement 2 vor, der die Präzision der Referenzflächen 5, 9 des Montagedorns 6 widerspiegelt; der Innenring des Lagers 1 und der hohlzylindrisch ausgebildete Abschnitt in Figur 1 rechts neben der Anschlagsfläche 4 des Deckelelements 2 befinden sich in definierter Zuordnung. Figur 2 ist zu entnehmen, wie das Lager 1 relativ zum Deckelelement 2 fixiert ist. Gut zu erkennen ist das eingespritzte Kunststoffmaterial 11, das das Lager 1 sowohl radial als auch axial relativ zum Deckelelement 2 festlegt.

Nachdem das in das Deckelelement 2 eingespritzte Lager vom Montagedorn 6 (siehe Figur 1) abgezogen ist, wird die Einheit, bestehend aus Lager 1, Deckelelement 2 und Kunststoffmaterial 11, am Maschinenteil 3 montiert, das im vorliegenden Fall ein Elektromotor ist. Das Maschinenteil 3 weist hierzu eine Referenzfläche 10 auf, die als axialer Anschlag ausgebildet ist. Wie Figur 2 entnommen werden kann, wird der sich in Figur 2 rechts der Anschlagsfläche 4 erstreckende hohlzylindrische Abschnitt des Deckelelements 2 in eine Nut 12 im Maschinenteil 3 eingeschoben, wodurch eine radiale Zentrierung des Deckelelements 2 am Maschinenteil 3 erreicht wird. Wenn die axiale Position des Deckelelements 2 erreicht ist, in der die Anschlagsfläche 4 des Deckelelements 2 an der Referenzfläche 10 anliegt, ist das Deckelelement 2 samt Lager 1 auch axial festgelegt. Durch die präzise Vormontage von Lager 1 und Deckelelement 2 liegt damit auch eine präzise Orientierung des Lagers 1 relativ zum Maschinenteil 3 vor.

## Patentansprüche

1. Verfahren zur Montage eines Lagers (1) in einem zumindest abschnittsweise rotationssymmetrisch ausgebildeten Deckelelement (2) eines Maschinenteils (3), das die Schritte aufweist:
a) Anordnen des Lagers (1) an einer Referenzfläche (9) eines Montagedorns (6);
b) Positionieren und Festlegen des Deckelelements (2) mit mindestens einer Anschlagsfläche (4) an mindestens einer Referenzfläche (5) des Montagedorns (6);
c) Fixieren des Lagers (1) an seiner Sitzfläche (7) im Deckelelement (2) in einer relativ zum Montagedorn (6) definierten Lage;
d) Abnehmen des Deckelelements (2) mit in ihm montierten Lager (1) vom Montagedorn (6);
e) Montieren des Deckelelements (2) mit in ihm montierten Lager (1) in das Maschinenteil (3), wobei die Anschlagsfläche (4) des Deckelelements (2) an einer Referenzfläche (10) des Maschinenteils (3) zur Anlage gebracht wird.

2. Verfahren zur Montage eines Lagers (1) in einem zumindest abschnittsweise rotationssymmetrisch ausgebildeten Deckelelement (2) eines Maschinenteils (3), das die Schritte aufweist:
a) Positionieren und Festlegen des Deckelelements (2) mit mindestens einer Anschlagsfläche (4) an mindestens einer Referenzfläche (5) eines Montagedorns (6);
b) Einsetzen und Fixieren des Lagers (1) an seiner Sitzfläche (7) im Deckelelement (2) in einer relativ zum Montagedorn (6) definierten Lage;
c) Abnehmen des Deckelelements (2) mit in ihm montierten Lager (1) vom Montagedorn (6);
d) Montieren des Deckelelements (2) mit in ihm montierten Lager (1) in das Maschinenteil (3), wobei die Anschlagsfläche (4) des Deckelelements (2) an einer Referenzfläche (10) des Maschinenteils (3) zur Anlage gebracht wird.

3. Verfahren nach Anspruch 1 oder 2, **dadurch gekennzeichnet, dass** bei der Durchführung des Schritts b) gemäß Anspruch 1 oder des Schritts a) gemäß Anspruch 2 das Deckelelement (2) mit mindestens einer Anschlagsnase (8) relativ zum Montagedorn (6) positioniert wird.

4. Verfahren nach einem der Ansprüche 1 bis 3, **dadurch gekennzeichnet, dass** bei der Durchführung des Schritts c) gemäß Anspruch 1 oder des Schritts b) gemäß Anspruch 2 das Lager (1) mittels einer Klebeverbindung im Deckelelement (2) fixiert wird.

5. Verfahren nach einem der Ansprüche 1 bis 3, **dadurch gekennzeichnet, dass** bei der Durchführung des Schritts c) gemäß Anspruch 1 oder des Schritts b) gemäß Anspruch 2 das Lager (1) mittels einer Kunststoffeinspritzung und/oder Kunststoffumspritzung im Deckelelement (2) fixiert wird.

6. Verfahren nach einem der Ansprüche 1 bis 3, **dadurch gekennzeichnet, dass** bei der Durchführung des Schritts c) gemäß Anspruch 1 oder des Schritts b) gemäß Anspruch 2 das Lager (1) mittels mechanischem Klemmen im Deckelelement (2) fixiert wird.

7. Verfahren nach einem der Ansprüche 1 bis 4, **dadurch gekennzeichnet, dass** das Maschinenteil (3) ein Elektromotor ist.

## Claims

1. Method for assembling a bearing (1) in a cap element (2), of rotationally symmetrical design at least in sections, of a machine part (3), said method comprising the steps:
a) arranging the bearing (1) on a reference surface (9) of an assembly mandrel (6);
b) positioning and fixing the cap element (2) with at least one stop surface (4) on at least one reference surface (5) of the assembly mandrel (6);
c) fixing the bearing (1) at its seating surface (7) in the cap element (2) in a position defined relative to the assembly mandrel (9);
d) removing the cap element (2), together with the bearing (1) fitted in it, from the assembly mandrel (6);
e) fitting the cap element (2), together with the bearing (1) fitted in it, into the machine part (3), the stop surface (4) of the cap element (2) being brought to bear against a reference surface (10) of the machine part (3).

2. Method for assembling a bearing (1) in a cap element (2), of rotationally symmetrical design at least in sections, of a machine part (3), said method comprising the steps:
a) positioning and fixing the cap element (2) with at least one stop surface (4) on at least one reference surface (5) of an assembly mandrel (6);
b) inserting and fixing the bearing (1) at its seating surface (7) in the cap element (2) in a position defined relative to the assembly mandrel (6);
c) removing the cap element (2), together with the bearing (1) fitted in it, from the assembly mandrel (6);
d) fitting the cap element (2), together with the bearing (1) fitted in it, into the machine part (3), the stop surface (4) of the cap element (2) being brought to bear against a reference surface (10) of the machine part (3).

3. Method according to Claim 1 or 2, **characterized in that**, when carrying out step b) according to Claim 1 or step a) according to Claim 2, the cap element (2) is positioned with at least one stop lug (8) relative to the assembly mandrel (6) .

4. Method according to one of Claims 1 to 3, **characterized in that**, when carrying out step c) according to Claim 1 or step b) according to Claim 2, the bearing (1) is fixed in the cap element (2) by means of an adhesive connection.

5. Method according to one of Claims 1 to 3, **characterized in that**, when carrying out step c) according to Claim 1 or step b) according to Claim 2, the bearing (1) is fixed in the cap element (2) by means of plastic injection and/or plastic encapsulation.

6. Method according to one of Claims 1 to 3, **characterized in that**, when carrying out step c) according to Claim 1 or step b) according to Claim 2, the bearing (1) is fixed in the cap element (2) by means of mechanical clamping.

7. Method according to one of Claims 1 to 4, **characterized in that** the machine part (3) is an electric motor.

## Revendications

1. Procédé pour monter un palier (1) dans un élément de couvercle (2), présentant au moins localement la symétrie de révolution, d'une partie de machine (3), qui comprend les étapes suivantes:
a) placer le palier (1) sur une surface de référence (9) d'un mandrin de montage (6);
b) positionner et immobiliser l'élément de couvercle (2) avec au moins une surface de butée (4) sur au moins une surface de référence (5) du mandrin de montage (6);
c) fixer le palier (1) sur sa surface d'appui (7) dans l'élément de couvercle (2) dans une position définie par rapport au mandrin de montage (6);
d) enlever l'élément de couvercle (2) avec le palier (1) monté dans celui-ci, hors du mandrin de montage (6);
e) monter l'élément de couvercle (2) avec le palier (1) monté dans celui-ci, dans la partie de machine (3), la surface de butée (4) de l'élément de couvercle (2) étant amenée à butée contre une surface de référence (10) de la partie de machine (3).

2. Procédé pour monter un palier (1) dans un élément de couvercle (2), présentant au moins localement la symétrie de révolution, d'une partie de machine (3), qui comprend les étapes suivantes:
a) positionner et immobiliser l'élément de couvercle (2) avec au moins une surface de butée (4) sur au moins une surface de référence (5) d'un mandrin de montage (6);
b) introduire et fixer le palier (1) sur sa surface d'appui (7) dans l'élément de couvercle (2) dans une position définie par rapport au mandrin de montage (6);
c) enlever l'élément de couvercle (2) avec le palier (1) monté dans celui-ci, hors du mandrin de montage (6);
d) monter l'élément de couvercle (2) avec le palier (1) monté dans celui-ci, dans la partie de machine (3), la surface de butée (4) de l'élément de couvercle (2) étant amenée à butée contre une surface de référence (10) de la partie de machine (3).

3. Procédé selon la revendication 1 ou 2, **caractérisé en ce que**, lors de l'exécution de l'étape b) selon la revendication 1 ou de l'étape a) selon la revendication 2, l'élément de couvercle (2) est positionné avec au moins un ergot de butée (8) par rapport au mandrin de montage (6):

4. Procédé selon l'une quelconque des revendications 1 à 3, **caractérisé en ce que**, lors de l'exécution de l'étape c) selon la revendication 1 ou de l'étape b) selon la revendication 2, le palier (1) est fixé dans l'élément de couvercle (2) au moyen d'un assemblage collé.

5. Procédé selon l'une quelconque des revendications 1 à 3, **caractérisé en ce que**, lors de l'exécution de l'étape c) selon la revendication 1 ou de l'étape b) selon la revendication 2, le palier (1) est fixé dans l'élément de couvercle (2) au moyen d'une injection de matière plastique et/ou d'un enrobage de matière plastique.

6. Procédé selon l'une quelconque des revendications 1 à 3, **caractérisé en ce que**, lors de l'exécution de l'étape c) selon la revendication 1 ou de l'étape b) selon la revendication 2, le palier (1) est fixé dans l'élément de couvercle (2) au moyen d'un serrage mécanique.

7. Procédé selon l'une quelconque des revendications 1 à 4, **caractérisé en ce que** la partie de machine (3) est un moteur électrique.
